# DEMANDE DE BREVET EUROPEEN

(11) **EP 4 718 737 A1**
(43) Date de publication de la demande: **01.04.2026**
(21) Numéro de dépôt: 25204654.5
(22) Date de dépôt: 25.09.2025
(51) Int. Cl.: H04B 5/45, H04B 5/77

(54) **DETECTION DE DISPOSITIF NFC**

(30) Priorité: 27.09.2024 FR 2410388
(71) Demandeur: STMicroelectronics International N.V., 1228 Plan-les-Ouates, Geneva (CH)
(72) Inventeur: CORDIER, Nicolas, 13080 AIX-EN-PROVENCE (FR); JAUNET, Guillaume, 06580 PEGOMAS (FR)
(74) Mandataire: Cabinet Beaumont

(57) **Abrégé**

La présente description concerne un procédé comprenant :
- la détection, par un dispositif en mode carte (102), d'une première salve de communication en champ proche émise par un dispositif externe (104), la première salve comprenant une première pulsation d'une durée de Tw **µ*s***; et
- l'émission, par le dispositif en mode carte en réponse au dispositif externe suite à la détection de la première pulsation de la première salve, d'une pulsation en radio fréquence d'une durée inférieure ou égale à Tw **µ*s***, dans un laps de temps inférieur ou égal à 10 **µ*s*** à partir d'un front avant de la première pulsation.

## Description

### Domaine technique

La présente description concerne de façon générale des dispositifs électroniques intégrant un circuit de communication en champ proche ("Near-Field Communication" - NFC, en anglais), et des procédés de détection de communication en champ proche.

### Technique antérieure

Les systèmes de communication à transpondeurs électromagnétiques sont de plus en plus fréquents, en particulier depuis le développement des technologies de communication en champ proche. Ces systèmes exploitent typiquement un champ électromagnétique radiofréquence généré par un dispositif NFC (terminal ou lecteur) pour détecter puis communiquer avec un autre dispositif NFC (carte) situé à portée.

La plupart du temps, les dispositifs NFC sont alimentés par batterie. Des périodes d'utilisation de leurs fonctions et circuits sont alors généralement entrecoupées de périodes de veille. Les périodes de veille permettent en particulier d'abaisser la consommation énergétique des dispositifs NFC. Un dispositif NFC est alors "réveillé" quand il détecte une étiquette électronique ou un autre dispositif à portée. Il existe un besoin pour un procédé de « réveil » d'un dispositif lecteur par un dispositif carte.

### Résumé de l'invention

Un mode de réalisation prévoit un procédé comprenant :
- la détection, par un dispositif en mode carte, d'une première salve de communication en champ proche émise par un dispositif externe, la première salve comprenant une première pulsation d'une durée Tw µ*s*; et
- l'émission, par le dispositif en mode carte en réponse au dispositif externe suite à la détection de la première pulsation de la première salve, d'une pulsation en radio fréquence d'une durée inférieure ou égale à la durée Tw µ*s,* dans un laps de temps inférieur ou égal à 10 µ*s* à partir d'un front avant de la première pulsation.

Selon un mode de réalisation, le procédé ci-dessus comprend en outre, avant la détection de la première salve :
- la détection, par le dispositif en mode carte, d'une deuxième salve de communication en champ proche émise par le dispositif externe, la deuxième salve comprenant une première pulsation ;
- la mesure, par le dispositif en mode carte de la durée de la première pulsation de la deuxième salve ;
- la détermination, par le dispositif en mode carte, de si la durée mesurée appartient à un premier intervalle de référence ; et
- si la durée mesurée appartient au premier intervalle de référence, la mesure, par le dispositif en mode carte, de la période séparant les premières pulsations des deuxième et première salves.

Selon un mode de réalisation, le procédé ci-dessus comprend en outre :
- la détermination, par le dispositif en mode carte, de si la période mesurée appartient à un deuxième intervalle de référence ; et
- si la période mesurée appartient au deuxième intervalle de référence, l'émission, par le dispositif en mode carte, du signal radio fréquence.

Selon un mode de réalisation, le deuxième intervalle est l'intervalle [100 ; 400] ms et le premier intervalle est l'intervalle [40 ; 60] µ*s.*

Selon un mode de réalisation, un front arrière de la pulsation en radio fréquence est antérieur à un front arrière de la première pulsation, ou postérieur au front arrière de la première pulsation par moins de 5 µ*s.*

Selon un mode de réalisation, le dispositif externe est dans un mode de faible consommation et l'émission du signal radio fréquence par le dispositif en mode carte provoque la sortie du dispositif externe du mode de faible consommation.

Selon un mode de réalisation, le dispositif externe est un dispositif émettant uniquement en mode lecteur.

Selon un mode de réalisation, le dispositif externe a une portée d'émission de communication en champ proche inférieure ou égale à 10 cm.

Selon un mode de réalisation, le signal radio fréquence émis par le dispositif en mode carte en réponse à la première salve est un signal ayant une fréquence de 13,56 Mhz.

Selon un mode de réalisation, le dispositif externe est une serrure électronique.

Un mode de réalisation prévoit un dispositif de communication en champ proche en mode carte comprenant :
- un détecteur de champ configuré pour détecter une première salve de communication en champ proche émise par un dispositif externe, la première salve comprenant une première pulsation d'une durée Tw µ*s*;
- une antenne configurée pour émettre, en réponse au dispositif externe suite à la détection de la première pulsation de la première salve, une pulsation en radio fréquence d'une durée inférieure ou égale à la durée Tw µ*s,* dans un laps de temps inférieur ou égal à 10 µ*s* à partir d'un front avant de la première pulsation.

Selon un mode de réalisation, le dispositif ci-dessus comprend en outre un compteur configuré pour :
- mesurer la durée d'une première pulsation d'une deuxième salve de communication en champ proche émise par le dispositif externe et détectée par le détecteur de champ avant la détection de la première salve ; et
- si la durée mesurée appartient à un premier intervalle de référence, mesurer la période séparant les premières pulsations des première et deuxième salves.

Un mode de réalisation prévoit un système comprenant :
- le dispositif en mode carte ci-dessus ; et
- le dispositif externe de communication en champ proche configuré pour, lorsqu'il est dans un mode de faible consommation, émettre la première salve de communication en champ proche.

Selon un mode de réalisation, le dispositif externe fonctionne uniquement en mode lecteur.

Selon un mode de réalisation, le dispositif externe est une serrure électronique.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de système de communication en champ proche ;
la figure 2 représente, de façon schématique et sous forme de blocs, un exemple de réalisation d'un circuit de communication en champ proche ;
la figure 3A est un chronogramme illustrant un exemple d'un procédé de détection de communication en champ proche par un dispositif en mode lecteur en veille ;
la figure 3B est un chronogramme illustrant plus en détail le moment de détection de communication en champ proche de la figure 3A ;
la figure 4 illustre une méthode d'assistance au dispositif en mode lecteur mise en œuvre par un dispositif en mode émulation de carte, selon un mode de réalisation de la présente description ; et
la figure 5 est un organigramme illustrant des étapes de la méthode d'assistance mise en œuvre par le dispositif en mode émulation de carte, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la génération des signaux radiofréquence et leur interprétation n'ont pas été détaillées, les modes de réalisation et modes de mise en œuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

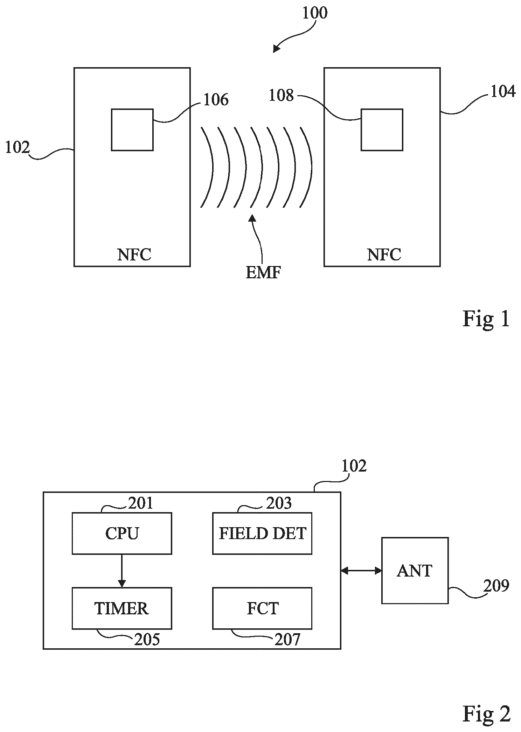

La figure 1 représente, de façon très schématique et sous forme de blocs, un exemple de système 100 de communication en champ proche du type auquel s'appliquent, à titre d'exemple, des modes de réalisation et modes de mise en œuvre décrits.

Le système 100 comprend un premier dispositif électronique 102 et un deuxième dispositif électronique 104. Les dispositifs électroniques 102 et 104 comprennent par exemple chacun un ou plusieurs circuits de communication en champ proche ("Near-Field Communication" - NFC, en anglais). A titre d'exemple, le dispositif 102 est configuré pour fonctionner en mode dit carte, correspondant à un mode d'émulation de carte ("card emulation mode" en anglais) tandis que le dispositif 104 est configuré pour fonctionner en mode dit lecteur ("reader mode", en anglais).

A titre d'exemple, le dispositif 102 intègre un circuit de communication en champ proche 106 comprenant au moins un élément ou circuit électronique de génération et de détection d'un signal radiofréquence à l'aide d'une antenne (non représentée), par exemple des circuits de modulation ou de démodulation. A titre d'exemple, le dispositif 104 intègre un circuit de communication en champ proche 108 comprenant au moins un élément ou circuit électronique d'émission et de détection d'un signal radiofréquence à l'aide d'une antenne (non représentée), par exemple des circuits de modulation ou de démodulation. Lors d'une communication du dispositif 102 vers le dispositif 104, le signal radiofréquence généré par le dispositif 102 est capté par le dispositif 104 lorsque celui-ci se trouve à portée. Le dispositif 102 émet un champ électromagnétique (EMF) capté par le dispositif 104 à portée. Il se forme alors un couplage entre deux circuits oscillants, en l'espèce celui de l'antenne du dispositif 102 et celui de l'antenne du dispositif 104. Ce couplage se traduit par une variation de la charge constituée par les circuits du dispositif 102 sur le circuit oscillant de génération du champ EMF du dispositif 102.

En pratique, pour établir une communication, une variation de phase ou d'amplitude du champ émis est détectée par le dispositif 102, qui entame alors un protocole de communication NFC avec le dispositif 104. Lorsque que le dispositif 102 détecte la présence du dispositif 104 dans son champ, il entame une procédure d'établissement de communication mettant en œuvre des émissions de requêtes par le dispositif 102 et de réponses par le dispositif 104, par exemple des séquences d'interrogations telles que définies dans les spécifications techniques de la norme NFC Forum.

A titre d'exemple, le dispositif 102 est un dispositif ayant la possibilité de fonctionner à la fois en mode carte et en mode lecteur, tel qu'un téléphone mobile, une télécommande, etc. Le dispositif 104 est par exemple un dispositif n'ayant pas la possibilité d'émuler une carte. Dans un exemple, le dispositif 104 est une serrure électronique, un dispositif de contrôle d'accès, etc. Par exemple, le dispositif 104 est configuré pour déverrouiller une porte, par exemple une porte de voiture, de logement, ou encore de casier. A titre d'exemple, le dispositif 104 est intégré dans une structure, par exemple dans une poignée de porte, dans un cadenas, etc. alimentée par exemple par une batterie. A titre d'exemple, les dispositifs 102 et 104 forment un système de transaction sans contact, tel que qu'un système de validation de cartes de transport, un système de paiement sans contact, etc.

Les dispositifs 102 et 104 sont configurés pour être commutés en mode dit faible consommation ("low power", en anglais), ou mode veille, lorsqu'ils ne sont pas en cours de communication afin de réduire l'énergie consommée. Cela est en particulier le cas pour les dispositifs NFC alimentés par batteries. Dans le mode faible consommation, un dispositif NFC configuré en mode lecteur exécute un mode dit de détection de carte de faible puissance ("Low Power Card Detection" - LPCD, en anglais) également appelé mode de détection d'étiquette ou de tag de faible puissance ("Low Power Tag Detection" - LPTD, en anglais), dans lequel il effectue des boucles de détection d'un autre dispositif se trouvant dans son champ (à portée) afin de sortir d'un mode veille à des fins de communication. Un exemple de mode faible consommation est décrit dans la demande de brevet publiée sous le numéro US20230189149. A titre d'exemple, les deux dispositifs 102 et 104 sont des téléphones mobiles comprenant des circuits NFC configurés pour être commutés en mode faible consommation.

Un exemple de détection en mode faible consommation est par exemple décrit dans la publication de brevet US 2023/0223989. Dans cet exemple, la détection en faible consommation est analogue à celle opérée lorsque le dispositif n'est pas en mode faible consommation. Toutefois, en mode normal, l'émission de la porteuse (du champ) est continue et inclut périodiquement des trames d'interrogation tandis que, en mode veille, l'émission du champ s'effectue par salves ("burst", en anglais) périodiques et sans trame d'interrogation afin de réduire la consommation. Les salves sont d'une durée nettement inférieure, par exemple dans un rapport d'au moins dix, de préférence d'au moins cent, à la durée d'une requête d'interrogation d'une carte en mode normal.

La figure 2 représente, de façon schématique et sous forme de blocs, un exemple de réalisation du circuit de communication en champ proche 106 du dispositif 102.

Le circuit de communication en champ proche 106 comprend, par exemple, une entité de calcul 201 (CPU), par exemple une machine d'états, un microcontrôleur, un microprocesseur, un circuit logique programmable, etc. Dans cet exemple, le circuit 106 comprend en outre un détecteur de champ 203 (FIELD DET). Le détecteur de champ 203 du dispositif 102 est par exemple configuré pour détecter un champ électromagnétique rayonné par le dispositif 104 lorsque ce dispositif est situé à portée du dispositif 102. A titre d'exemple, la portée du champ électromagnétique rayonnée par le dispositif 104 est de l'ordre de plusieurs centimètres, par exemple inférieure ou égale à 50 cm.

Le circuit de communication en champ proche 106 comprend en outre un compteur 205 (TIMER) commandé par l'entité de calcul 201.

Le circuit 102 comprend, par exemple, divers autres éléments ou circuits en fonction de l'application, par exemple un générateur de signaux, des convertisseurs analogique-numérique et/ou numérique-analogique, des circuits de modulation et/ou de démodulation, un circuit d'adaptation d'impédance, un circuit de filtrage, etc. Ces éléments et circuits sont symbolisés par un unique bloc fonctionnel 207 (FCT). Le circuit de communication en champ proche 106 comprend, par exemple, en outre une ou plusieurs zones de stockage volatile, une ou plusieurs zones de stockage non volatile, un ou plusieurs bus de données, d'adresses, de commandes entre les différents éléments internes au circuit 106 ainsi qu'une ou plusieurs interfaces d'entrée-sortie de communication avec l'extérieur du circuit 106.

Le dispositif 102 comprend une antenne 209 (ANT) d'émission et de réception de signaux radiofréquence couplée au circuit 106. L'antenne 209 est, par exemple, configurée pour émettre le champ électromagnétique EMF. Selon un mode de réalisation, le circuit 106 comprend une fonctionnalité de réponse rapide lui permettant d'émettre un signal radio fréquence rapidement, par exemple entre 2 et 10 microsecondes incluse, après avoir détecté un front avant d'une pulsation en radio fréquence venant d'un dispositif externe, par exemple le dispositif 104. Dans un exemple, cette fonctionnalité est implémentée de manière matérielle par une machine d'états. Dans un autre exemple, cette fonctionnalité est mise en œuvre par l'entité de calcul 201 sous l'exécution d'instructions logicielles. Dans un autre exemple, cette fonctionnalité est intégrée dans le détecteur de champ 203. A titre d'exemple, dans le mode faible consommation, le détecteur de champ 203 consomme entre 0.1 µA et 15 µA inclus et sa sensibilité de détection est d'entre 50 mVpp et 15 Vpp. Dans un exemple, la fonctionnalité de réponse rapide est mise en œuvre par détection de l'amplitude et de la fréquence du signal incident. La durée de la détection est alors de l'ordre de la centaine de microsecondes. Dans un autre exemple, uniquement l'amplitude du signal incident est détectée et dans ce cas, la durée de la détection est de l'ordre de quelques microsecondes, par exemple entre 2 et 10 µs.

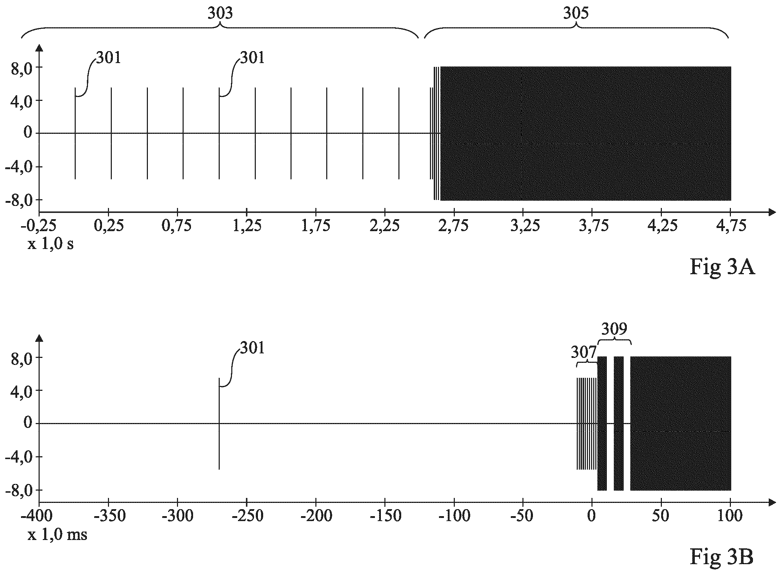

La figure 3A est un chronogramme illustrant un exemple d'un procédé de détection, par un dispositif en mode lecteur et en veille, par exemple le dispositif 104, d'un dispositif en mode émulation de carte, par exemple le dispositif 102. La figure 3B est un chronogramme illustrant plus en détail le moment de détection.

Lorsqu'il est en mode veille, correspondant à une période 303 en figure 3A, le dispositif 104, qui cherche à détecter la présence du dispositif 102 à portée, émet périodiquement une salve de champ. Chaque salve de champ comporte par exemple une pulsation 301 correspondant à une porteuse sans modulation. La période des pulsations 301, correspondant à l'intervalle entre deux pulsations 301, dépend des dispositifs, mais est généralement de quelques dizaines ou centaines de millisecondes. Par exemple, la fréquence des pulsations 301 en mode faible consommation est de l'ordre de quelques hertz, par exemple de l'ordre de 3 ou 4 Hz.

La durée d'une pulsation 301 est, par exemple, de l'ordre de la dizaine ou de la centaine de microsecondes, par exemple égale à entre 20 et 100 µs inclus, et par exemple entre 40 et 60 µs inclus, telle qu'environ 50 µs.

À titre d'exemple, le dispositif 104 sort du mode faible consommation temporairement et périodiquement pour émettre les salves 301. En général, on préfère toutefois utiliser une machine d'états pour l'émission de salves en mode faible consommation. Cela évite de réveiller un microcontrôleur, par exemple l'entité de calcul 201, du dispositif 104 et permet ainsi de rester en mode veille.

Si une mesure d'amplitude et/ou de phase effectuée par le dispositif 104 dépasse un seuil de détection, le dispositif 104 sort du mode faible consommation et démarre une phase de détection 305, comprenant par exemple l'émission des pulsation 307 à période réduite par rapport à la période des pulsations 301, et servant à confirmer la détection de champ. La détection du dispositif 102 est possible car son effet charge sur l'antenne du dispositif 104 a un impact sur l'amplitude et la phase des salves 301. Une procédure 309 d'établissement de communication en champ proche est ensuite effectuée, mettant en œuvre des émissions de requêtes et de réponses entre les dispositifs 102 et 104, par exemple des séquences d'interrogations telles que définies dans les spécifications techniques de la norme NFC Forum.

Cependant, lorsque l'antenne couplée au dispositif lecteur 104 a une portée relativement faible, par exemple moins de 10 cm, il est difficile pour le dispositif 104 de détecter le dispositif 102.

Une méthode d'assistance au mode faible consommation permet au dispositif 102 d'étendre la portée de détection du dispositif 104. Le dispositif 102 est alors configuré pour émettre un signal radio fréquence, par exemple à 13,56 Mhz, pendant que le dispositif 104 émet en mode faible consommation afin de modifier les caractéristiques électriques du dispositif 104, et faciliter ainsi la détection de la présence du dispositif 102 par le dispositif 104. Cependant, afin de respecter la norme NFC Forum standard, le dispositif 104 devrait cesser d'émettre les salves en présence d'un signal radio fréquence externe.

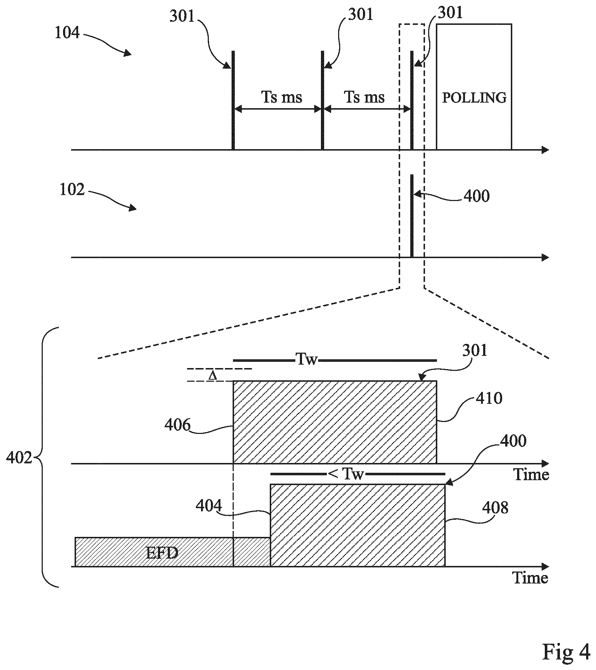

La figure 4 illustre une méthode d'assistance au dispositif 104 mise en œuvre par le dispositif 102, selon un mode de réalisation de la présente description.

Dans l'exemple illustré, le dispositif lecteur 104 est en mode faible consommation et émet des salves de détection comprenant des pulsations 301.

Deux pulsations 301 de deux salves de détection consécutives sont séparées par une durée de Ts ms, où Ts est par exemple compris entre 10 et 500 ms inclus, et par exemple entre 100 à 400 ms inclus.

Chaque pulsation 301 est émise durant une durée de Tw µ*s,* où Tw est, par exemple, compris entre 20 et 100 µ*s* inclus, et par exemple entre 40 et 60 µ*s* inclus, telle qu'environ 50 µs.

Le dispositif 102 est par exemple configuré pour détecter les salves consécutives. En particulier, le dispositif 102 est configuré pour émettre un signal radio fréquence 400, par exemple à 13,56 Mhz, lorsqu'il détecte une ou plusieurs salves. Selon un mode de réalisation, le dispositif 104 met en œuvre sa fonctionnalité de réponse rapide (EFD). A titre d'exemple, cette fonctionnalité est activée lorsque le dispositif 102 est aussi en mode faible consommation.

Un graphique 402 de la figure 4 est un zoom autour d'une pulsation 301 émise par le dispositif 102. A titre d'exemple, le dispositif 102 est configuré pour, suite à la détection d'une pulsation 301, émettre en réponse le signal radio fréquence 400 d'une durée inférieure ou égale à Tw ms. Le signal 400 est une pulsation émise avant la fin de la pulsation émise par le dispositif 104, et ayant un front avant 404 dans un intervalle égal ou inférieur à 10 µ*s* à partir du front avant 406 de la pulsation 301 détectée. A titre d'exemple, en réponse à la détection de l'émission de la pulsation 301, la pulsation 400 est émise entre 2 et 10 µ*s* à partir du front avant 406 de la pulsation 301 détectée.

Dans l'exemple de la figure 4, un front arrière 408 de la pulsation 400 est postérieur à un front arrière 410 du la pulsation 301. Toutefois, la durée de la pulsation 400 est par exemple choisie afin de limiter ce dépassement à 5 µ*s* après le front arrière 410. Dans d'autres exemples, le front arrière 408 est antérieur au front arrière 410. En particulier, la pulsation 400 impacte les caractéristiques électriques d'amplitude et/ou de phase de la pulsation 301. L'impact sur l'amplitude de la pulsation 301 est représenté en figure 4 par le symbole Δ.

La pulsation 400 émit par le dispositif 102 permet au dispositif 104 de sortir du mode faible consommation afin de passer, par exemple, dans un mode d'interrogation (en anglais

### « polling ») (POLLING).

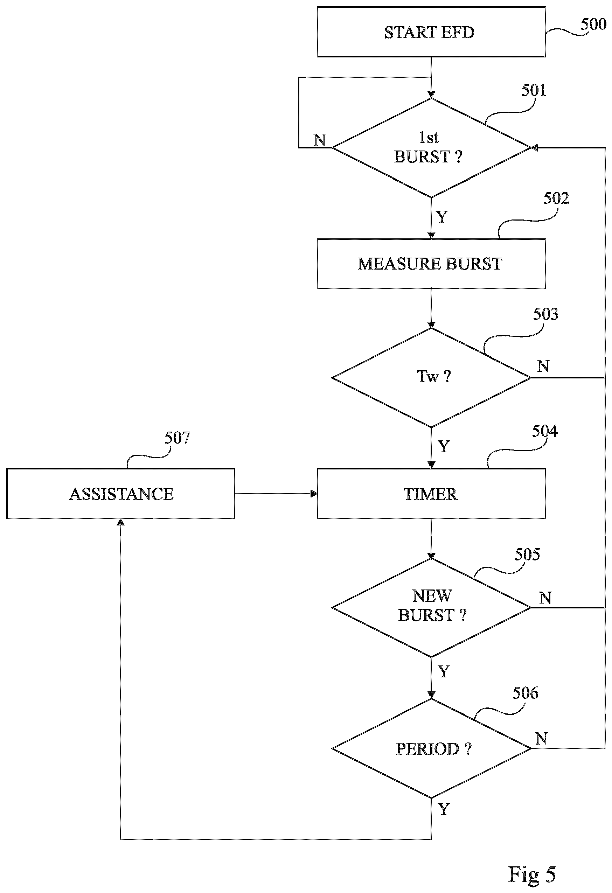

La figure 5 est un organigramme illustrant des étapes de la méthode d'assistance au dispositif 104 mise en œuvre par le dispositif 102, selon un mode de réalisation de la présente description.

Dans une étape 500 (START EFD), le dispositif 102, par exemple en mode faible consommation, active la fonctionnalité de réponse rapide.

Dans une étape 501 (1st BURST ?), suivant l'activation de la fonctionnalité de réponse rapide, le dispositif 102 est configuré pour détecter, par l'intermédiaire du détecteur de champ 203, une première salve, et en particulier une première pulsation 301, émise par un dispositif lecteur externe, tel que par exemple le dispositif 104 en mode faible consommation.

Lorsque le dispositif 102 ne détecte pas de salve (branche N en sortie du block 501) le procédé continue dans une nouvelle étape de détection 501.

Lorsque le dispositif 102 détecte un champ externe, (branche Y en sortie du bloc 501), le procédé continue dans une étape 502 (MEASURE BURST). Le dispositif 102 est alors configuré pour mesurer la longueur de la pulsation 301 émise par le dispositif 104. A titre d'exemple, la mesure de la durée de la pulsation est effectuée par le compteur 205.

Lorsque la mesure de la pulsation est effectuée, le procédé continue dans une étape 503 (Tw ?) dans laquelle le dispositif 102 est configuré pour déterminer si la mesure effectuée appartient à un intervalle de référence comprenant la durée attendue de la pulsation 301. A titre d'exemple, pour une durée Tw de 50 µ*s*, l'intervalle de référence est [40, 60] µ*s.* Lorsque la mesure de la durée de la pulsation est en dehors de l'intervalle de référence (branche N en sortie du bloc 503), le procédé reprend à l'étape 501.

Lorsque la mesure de la durée de la pulsation appartient à l'intervalle de référence (branche Y en sortie du bloc 503) le procédé continue dans une étape 504 (TIMER). Lors de la réalisation de l'étape 504, le dispositif 102 est configuré pour déclencher le compteur 205. A titre d'exemple, le compteur 205 est déclenché directement suite à la fin de la pulsation de la première salve.

A titre d'exemple, dans une étape 505 (NEW BURST ?), il est déterminé si une nouvelle salve est détectée par le détecteur 203 avant que le compteur 205 atteigne un laps de temps seuil T. A titre d'exemple, la durée T est supérieure à la période Ts attendue entre les pulsations 301, et est par exemple de l'ordre de 500 ms. Si à l'expiration du laps de temps seuil, aucune autre salve n'a été détectée (branche N en sortie du bloc 505) le procédé reprend dans une nouvelle réalisation de l'étape 502.

Si une nouvelle salve est détectée, par le détecteur de champ 203, avant l'expiration du laps de temps seuil, (branche Y en sortie du bloc 505) le procédé continue dans une étape 506 (PERIOD?). Lors de la réalisation de l'étape 506, le laps de temps mesuré par le compteur 205 entre les deux salves, correspondant à la période du champ émis par le dispositif 104, est comparé à un intervalle de période de référence comprenant la période Ts. A titre d'exemple, pour une période Ts de 50 ms, l'intervalle de période de référence est compris dans l'intervalle [100 ; 400] ms. Dans le cas où la période mesurée est en dehors de l'intervalle de période de référence, le procédé reprend dans une nouvelle réalisation de l'étape 502. Dans le cas où la période mesurée appartient bien à l'intervalle de période de référence, le procédé continue dans une étape 507 (ASSISTANCE).

Lors de la réalisation de l'étape 507, le dispositif 102 est configuré pour émettre un signal radio fréquence rapidement, c'est à dire avant la fin de l'émission de la pulsation de la deuxième salve. L'émission de ce signal radio fréquence est par exemple mis en œuvre par l'intermédiaire de la fonctionnalité de réponse rapide. A titre d'exemple, le signal radio fréquence émis par le dispositif 102 est émis dans un laps de temps inférieur ou égal à 10 µ*s* après le début de l'émission de la pulsation de la nouvelle salve par le dispositif externe. A titre d'exemple, le signal radio fréquence est émis 5 µ*s* après la détection du front avant de la pulsation de la nouvelle salve. La durée d'émission du signal radio fréquence émis par le dispositif 102 est par exemple inférieur ou égal à la durée Tw d'émission de la pulsation de la salve émise par le dispositif 104.

Le signal radio fréquence émis en réponse par le dispositif 102 est par exemple un signal à 13,56 MHz. A titre d'exemple, le signal radio fréquence émis en réponse permet de modifier les caractéristiques électriques du dispositif externe 104. Suite à la réalisation de l'étape 507, le procédé continue dans une nouvelle réalisation de l'étape 504 dans laquelle le compteur 205 est activé.

A titre d'exemple, le procédé est actif dès qu'un mode carte est activé dans le dispositif. A titre d'exemple, un mode carte est activé lorsqu'une carte ou une clé numérique est ajoutée au portefeuille du dispositif, ou lorsque l'utilisateur du dispositif active la communication en champ proche du dispositif.

Un avantage des modes de réalisation décrits est qu'ils permettent à un dispositif en mode carte d'être détecté par un dispositif externe ne pouvant émettre qu'en mode lecteur.

Un autre avantage des modes de réalisation décrits est qu'ils permettent à un dispositif en mode carte d'être détecté par un dispositif lecteur ayant une faible portée, par exemple moins d'une dizaine de cm.

Un autre avantage des modes de réalisation décrits est qu'ils permettent la mise en œuvre d'une assistance à un dispositif en mode lecteur en mode faible consommation tout en respectant la norme NFC Forum standard.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus. En particulier, pour ce qui est de l'implémentation, matérielle ou logicielle, de la fonctionnalité de réponse rapide. De plus, les modes de réalisations décrits peuvent s'appliquer par exemple au cas où les deux dispositifs sont des téléphones mobiles dont les circuits de communication en champ proche sont configurés pour être commutés en mode faible consommation. La mise en œuvre des modes de réalisations décrits permet alors d'augmenter la distance de détection entre les deux téléphones lorsque ceux-ci communiquent entre eux par l'intermédiaire du NFC.

## Revendications

1. Procédé comprenant :
- la détection, par un dispositif en mode carte (102), d'une première salve de communication en champ proche émise par un dispositif externe (104), la première salve comprenant une première pulsation (301) d'une durée Tw **µ*s***; et
- l'émission, par le dispositif en mode carte en réponse au dispositif externe suite à la détection de la première pulsation de la première salve, d'une pulsation en radio fréquence (400) d'une durée inférieure ou égale à la durée Tw **µ*****s**,* dans un laps de temps inférieur ou égal à 10 **µ*s*** à partir d'un front avant de la première pulsation.

2. Procédé selon la revendication 1, comprenant en outre, avant la détection de la première salve :
- la détection, par le dispositif en mode carte (102), d'une deuxième salve (301) de communication en champ proche émise par le dispositif externe (104), la deuxième salve comprenant une première pulsation (301) ;
- la mesure, par le dispositif en mode carte de la durée de la première pulsation de la deuxième salve ;
- la détermination, par le dispositif en mode carte, de si la durée mesurée appartient à un premier intervalle de référence ; et
- si la durée mesurée appartient au premier intervalle de référence, la mesure, par le dispositif en mode carte, de la période (Ts) séparant les premières pulsations des deuxième et première salves.

3. Procédé selon la revendication 2, comprenant en outre :
- la détermination, par le dispositif en mode carte (102), de si la période mesurée appartient à un deuxième intervalle de référence ; et
- si la période mesurée appartient au deuxième intervalle de référence, l'émission, par le dispositif en mode carte, du signal radio fréquence (400).

4. Procédé selon la revendication 3, dans lequel le deuxième intervalle est l'intervalle [100 ; 400] ms et le premier intervalle est l'intervalle [40 ; 60] **µ*****s**.*

5. Procédé selon l'une quelconque des revendications 2 à 4, dans lequel un front arrière (408) de la pulsation en radio fréquence (400) est antérieur à un front arrière (410) de la première pulsation, ou postérieur au front arrière (410) de la première pulsation par moins de 5 **µ*****s**.*

6. Procédé selon l'une quelconque des revendications 1 à 5, dans lequel le dispositif externe (104) est dans un mode de faible consommation et dans lequel l'émission du signal radio fréquence (400) par le dispositif en mode carte (102) provoque la sortie du dispositif externe du mode de faible consommation.

7. Procédé selon l'une quelconque des revendications 1 à 6, dans lequel le dispositif externe (104) est un dispositif émettant uniquement en mode lecteur.

8. Procédé selon l'une quelconque des revendications 1 à 7, dans lequel le dispositif externe (104) a une portée d'émission de communication en champ proche inférieure ou égale à 10 cm.

9. Procédé selon l'une quelconque des revendications 1 à 8, dans lequel le signal radio fréquence (400) émis par le dispositif en mode carte (102) en réponse à la première salve est un signal ayant une fréquence de 13,56 Mhz.

10. Procédé selon l'une quelconque des revendications 1 à 9, dans lequel le dispositif externe (104) est une serrure électronique.

11. Dispositif de communication en champ proche en mode carte (102) comprenant :
- un détecteur de champ (203) configuré pour détecter une première salve de communication en champ proche émise par un dispositif externe (104), la première salve comprenant une première pulsation (301) d'une durée Tw **µ*s***;
- une antenne (209) configurée pour émettre, en réponse au dispositif externe suite à la détection de la première pulsation de la première salve, une pulsation en radio fréquence (400) d'une durée inférieure ou égale à la durée Tw **µ*****s**,* dans un laps de temps inférieur ou égal à 10 **µ*s*** à partir d'un front avant de la première pulsation.

12. Dispositif selon la revendication 11, comprenant en outre un compteur (205) configuré pour :
- mesurer la durée d'une première pulsation (301) d'une deuxième salve de communication en champ proche émise par le dispositif externe (104) et détectée par le détecteur de champs (203) avant la détection de la première salve ; et
- si la durée mesurée appartient à un premier intervalle de référence, mesurer la période (Ts) séparant les premières pulsations des première et deuxième salves.

13. Système (100) comprenant :
- le dispositif en mode carte (102) selon la revendication 11 ou 12 ; et
- le dispositif externe (104) de communication en champ proche configuré pour, lorsqu'il est dans un mode de faible consommation, émettre la première salve de communication en champ proche.

14. Système selon la revendication 13, dans lequel le dispositif externe (104) fonctionne uniquement en mode lecteur.

15. Système selon la revendication 14, dans lequel le dispositif externe (104) est une serrure électronique.
